# EUROPEAN PATENT SPECIFICATION

(11) **EP 2 990 130 B1**
(45) Date of publication and mention of the grant of the patent: **31.01.2018**
(21) Application number: 14182993.7
(22) Date of filing: 01.09.2014
(51) Int. Cl.: B09B 3/00, A62D 3/40, F27D 3/12, F27B 9/26, F27D 5/00

(54) **Method for heating an asbestos-containing waste product and apparatus for removing the resulting safe product**
Verfahren zur Erhitzung eines asbesthaltigen Abfallprodukts und Vorrichtung zur Beseitigung des resultierenden sicheren Produkts
Procédé pour chauffer un produit contenant de l'amiante et dispositif pour retirer le produit inoffensif résultant

(43) Date of publication of application: 02.03.2016
(73) Proprietor: D-Nature B.V., 7524 AE Enschede (NL)
(72) Inventor: Reef, Antonius Gerhard Anastasius, 7556 PE Hengelo (NL)
(74) Representative: De Vries & Metman

(56) References cited:
- WO-A1-2010/119419
- JP-A- 2010 149 080
- JP-A- 2011 016 051

## Description

The present invention relates to a method for heating an asbestos-containing waste product and removing the resulting safe product, comprising the steps of placing an asbestos-containing waste product on a platform, transporting the platform including the product into a kiln, heating the platform including the product and removing the product from the platform after heating by tilting the platform.

A variety of products containing asbestos fibers were used in the past because of their excellent insulating and fire-resistant properties, for example building materials. When asbestos was used for its resistance to fire or heat, the fibers were often mixed with cement, resulting in asbestos cement. It is known that prolonged inhalation of asbestos fibers can cause serious illnesses such as asbestosis. Therefore, the use of asbestos has been restricted in many countries. The demolition of a building which contains a large amount of asbestos-based materials is mostly deconstructed piece by piece. The asbestos-containing demolition materials are wrapped at the location of demolition and transported to a recycling site. In the Netherlands about 80,000 tons of asbestos-based demolition materials, such as corrugated plates and sewer pipes, must be processed annually.

WO 2010/119419 is related to a method of reclaiming asbestos and asbestos-containing waste comprising the steps of: receiving said asbestos and asbestos-containing waste in a loose condition; heating said asbestos and asbestos-containin waste by heating means to an asbestos molecular modification temperature, thereby obtaining an inert mass of asbestos and asbestos-containing waste; which method comprising: loading said asbestos and asbestos-containing waste into movable/carriable container means thereby obtaining loaded container means; moving said loaded containers within said heating means at said molecular modification temperature for a predetermined time.

EP 1 277 527 is related to a method for converting an asbestos-containing waste product into a safe asbestos-free product. The asbestos-containing waste product is supplied to a tunnel kiln. During a predetermined residence time the waste product is exposed to a temperature of about 600-1000 ° C. As a consequence, the asbestos fibers contained in the asbestos-containing waste product are dehydrated. Due to the release of water the actual chemical structure of the asbestos fibers is essentially retained, and a pseudomorphic water-free fiber structure is produced. It appears that the fibers become brittle after the heat treatment. The resulting water-free fiber structure is destroyed, forming the physiologically harmless asbestos-free product, which has a cementitious chemical composition with the character of a secondary raw material suitable for the cement industry, for example. The resulting harmless product can also be used in non-asbestos building material products, for example as a filler.

After the heat treatment the product is removed from the platform by tilting the platform. This appears to be very effective in order to remove the safe asbestos-free product from the platform.

Since the platform is also susceptible to a high temperature during the heat-treatment the present invention aims to provide a method wherein the method can be performed reliably.

For this purpose the platform comprises separate heat-resistant elements which are engaged together before tilting the platform.

The separate heat resistant elements allow the platform to expand and shrink during heating and cooling down to a great extent, respectively. The risk of damaging the platform during the heat treatment is minimized, for example compared to a platform which is made of a single piece. In order to tilt the entire platform the separate elements are engaged together before tilting.

In a practical embodiment the heat-resistant elements are supported by a mobile carrier. The carrier may be used to transport the product - and the platform - into the kiln as well as to transport the heat-treated product out of the kiln to a site where the product is discharged from the carrier.

The step of heating may be performed in a continuous kiln or tunnel oven through which the carrier is displaced.

The platform may comprise a matrix of the separate elements in a horizontal plane including at least two rows of the separate elements in a first direction and at least two rows of the separate elements in a second direction perpendicular to the first direction. Different numbers of rows in both directions are conceivable.

The separate elements may be block-shaped and they are preferably made of a refractory material. Numerous dimensions of the separate elements are conceivable.

In an advantageous embodiment each of the separate elements is provided with at least a hole, in which holes pin-shaped protrusions are inserted in order to engage the separate elements together.

The holes of the separate elements of the platform may be parallel. This provides the possibility of engaging a number of elements simultaneously by means of a fork-shaped apparatus.

The holes may be through-holes, wherein one pin-shaped protrusion is inserted into holes of at least two adjacent separate elements. Preferably, the holes are aligned, hence facilitating the insertion of the protrusion.

The protrusions may be inserted from opposite sides into holes of a row of separate elements. For example, a row of elements that are located behind each other in the same direction as the centre lines of the holes such that the respective holes are aligned, can be engaged in a stable manner by inserting two protrusions from opposite sides into the aligned holes.

Preferably, each of the separate elements is provided with at least two parallel holes in order to improve stability of each element during the step of tilting.

After the step of heating, the product may be put into a grinder in which the heat-treated product is pulverized such that the resulting material can be used for a next process.

The invention is also related to an apparatus for removing the safe product in the method as described hereinbefore, comprising two rows of pin-shaped protrusions which face to each other and are movable towards and away from each other in longitudinal direction of the protrusions, wherein the pin-shaped protrusions are mounted to a frame that is tiltable with respect to a basis. The basis may be fixed to the floor. The frame can also be adapted to lift the platform before tilting.

The invention will hereafter be elucidated with reference to the very schematic drawings illustrating an embodiment of the invention by way of example.
Fig. 1 is a schematic side view of a mobile carrier including a platform supporting an asbestos-containing waste product, illustrating a part of an embodiment of the method according to the invention.
Fig. 2 is a frontal view of the carrier of Fig. 1, illustrating a different step of the method.
Fig. 3 is a top view of the carrier as shown in Figs. 1 and 2, in which the product is not shown.
Fig. 4 is a similar view as Fig. 2, but showing a next step of the method.

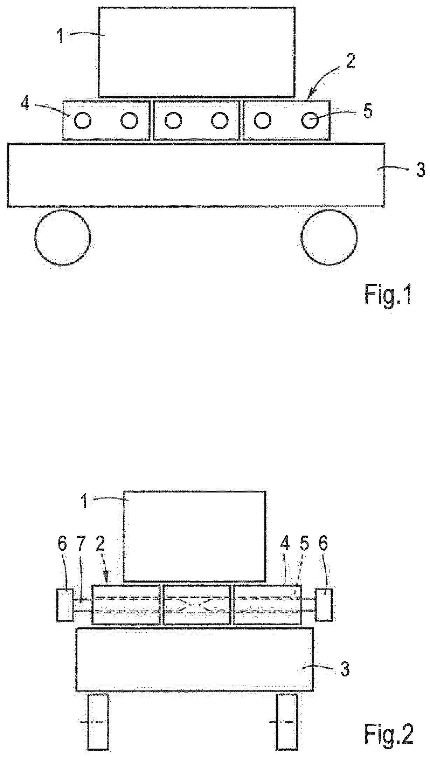

Figs. 1-4 illustrate different steps of an embodiment of the method according to the invention, wherein an asbestos-containing waste product 1 is heated after which the resulting safe asbestos-free product is removed.

Fig. 1 shows an asbestos-containing waste product 1 which is placed on a platform 2. The platform 2 is supported by a mobile carrier 3 which is driven through a continuous kiln or tunnel oven (not shown). The carrier 3 including the platform 2 and the asbestos-containing waste product 1 are exposed to a temperature of 600-1000 ° C during a predetermined residence time in the kiln. After the heat treatment the product 1 on the platform 2 looks like the same as before the heat treatment, but is now a safe asbestos-free product 1. The carrier 3 including the platform 2 and the safe product 1 is transported to a location where the product 1 will be removed from the platform 2 and put into a grinder (not shown) in which the heat-treated product 1 is pulverized.

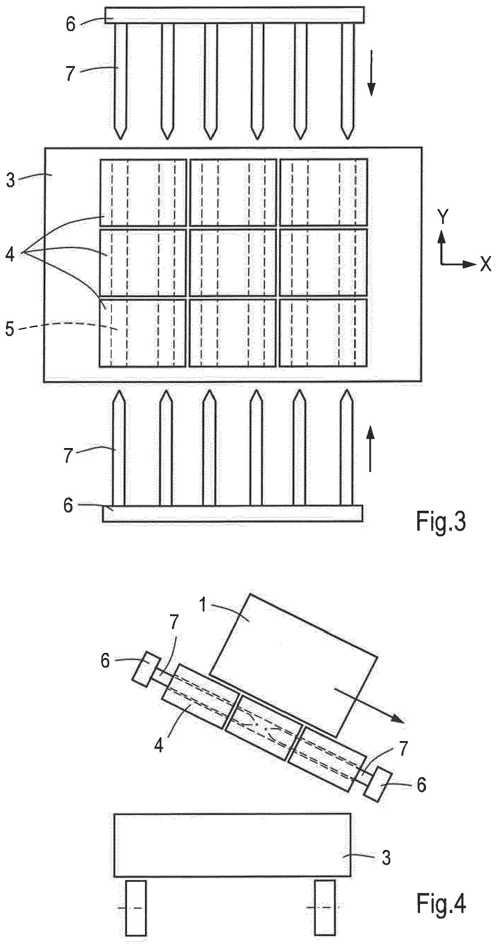

The platform 2 is formed of a matrix of separate heat-resistant elements which are made of a refractory material, in this case block-shaped refractory bricks 4. Fig. 3 shows that the matrix of refractory bricks 4 extends in a horizontal plane and comprises three rows of bricks 4 in a driving direction X of the carrier 3 and three rows of bricks 4 in a transverse direction Y perpendicular to the driving direction X. Alternative numbers of rows are conceivable.

Each of the bricks 4 is provided with two parallel through-holes 5. The matrix of bricks 4 is arranged such that the respective through-holes 5 of two adjacent bricks 4 in transverse direction Y are aligned.

Figs. 2 and 3 show an apparatus 6 which has two rows of pin-shaped protrusions 7 which face to each other. The apparatus 6 is adapted to move the rows of protrusions 7 to and from each other in transverse direction Y as indicated by arrows in Fig. 3. The mutual distances of the protrusions 7 in driving direction X correspond to the locations of the corresponding holes 5 of the bricks 4 on the mobile carrier 3.

Fig. 3 illustrates a condition before the protrusions 7 are inserted into the holes 5 of the bricks 4, whereas Fig. 2 illustrates a condition in which the protrusions are inserted into the holes 5 from opposite sides of the platform 2. In this stage the bricks 4 are engaged together by the apparatus 6. In a next step the apparatus 6 lifts the platform 2 including the product 1 and tilts the platform 2 such that the product 1 moves downwardly as shown by an arrow in Fig. 4. As mentioned above the product 1 can be put into a grinder for pulverizing the product 1 and use the resulting powder as a filler for other products, for example.

After removing the product 1 from the platform 2 the bricks 4 can be placed back together onto the carrier 3 by means of the apparatus 6 such that the carrier 3 is ready for supporting and heat treating a next product.

## Claims

1. A method for heating an asbestos-containing waste product (1) and removing the resulting safe product, comprising the steps of placing an asbestos-containing waste product (1) on a platform (2), transporting the platform (2) including the product (1) into a kiln, heating the platform (2) including the product (1), removing the product (1) from the platform (2) after heating by tilting the platform (2), wherein the platform (2) comprises separate heat-resistant elements (4) which are engaged together before tilting the platform (2).

2. A method according to claim 1, wherein the heat-resistant elements (4) are supported by a mobile carrier (3).

3. A method according to claim 2, wherein the step of heating is performed in a continuous kiln through which the carrier (3) is displaced.

4. A method according to one of the preceding claims, wherein the platform (2) comprises a matrix of the separate elements (4) in a horizontal plane including at least two rows of the separate elements (4) in a first direction (X) and at least two rows of the separate elements (4) in a second direction (Y) perpendicular to the first direction (X).

5. A method according to one of the preceding claims, wherein the separate elements (4) are block-shaped.

6. A method according to one of the preceding claims, wherein the separate elements (4) are made of a refractory material.

7. A method according to one of the preceding claims, wherein each of the separate elements (4) is provided with at least a hole (5), in which holes (5) pin-shaped protrusions (7) are inserted in order to engage the separate elements (4) together.

8. A method according to claim 7, wherein the holes (5) of the separate elements (4) of the platform (2) are parallel.

9. A method according to claim 8, wherein the holes (5) are through-holes, and wherein one pin-shaped protrusion (7) is inserted into holes (5) of at least two adjacent separate elements (4).

10. A method according to claim 9, wherein the protrusions (7) from opposite sides are inserted into the holes (5) of a row of separate elements (4).

11. A method according to one of the preceding claims, wherein each of the separate elements (4) is provided with at least two parallel holes (5).

12. A method according to one of the preceding claims, wherein after the step of heating the product (1) is put into a grinder in which the heat-treated product is pulverized.

13. An apparatus (6) for removing the resulting safe product in the method according to one of the claims 1-12, comprising two rows of pin-shaped protrusions (7) which face to each other and are movable towards and away from each other in longitudinal direction of the protrusions (7), wherein the pin-shaped protrusions (7) are mounted to a frame that is tiltable with respect to a basis.

## Patentansprüche

1. Verfahren zur Erhitzung eines asbesthaltigen Abfallprodukts (1) und zur Beseitigung des resultierenden sicheren Produkts, aufweisend die Schritte: Anordnen eines asbesthaltigen Abfallprodukts (1) auf einer Plattform (2), Transportieren der Plattform (2) einschließlich des Produkts (1) in einen Ofen, Erhitzen der Plattform (2) einschließlich des Produkts (1), Beseitigen des Produkts (1) von der Plattform (2) nach dem Erhitzen durch Kippen der Plattform (2), wobei die Plattform (2) separate hitzebeständige Elemente (4) aufweist, die vor dem Kippen der Plattform (2) miteinander in Eingriff gebracht werden.

2. Verfahren nach Anspruch 1, wobei die hitzebeständigen Elemente (4) von einem mobilen Träger (3) getragen werden.

3. Verfahren nach Anspruch 2, wobei der Schritt des Erhitzens in einem Durchlaufofen durchgeführt wird, durch welchen der Träger (3) hindurchbewegt wird.

4. Verfahren nach einem der vorstehenden Ansprüche, wobei die Plattform (2) eine Matrix der separaten Elemente (4) in einer horizontalen Ebene aufweist, die mindestens zwei Reihen der separaten Elemente (4) in einer ersten Richtung (X) und mindestens zwei Reihen der separaten Elemente (4) in einer zur ersten Richtung (X) senkrechten zweiten Richtung (Y) umfasst.

5. Verfahren nach einem der vorstehenden Ansprüche, wobei die separaten Elemente (4) blockförmig sind.

6. Verfahren nach einem der vorstehenden Ansprüche, wobei die separaten Elemente (4) aus einem feuerfesten Material hergestellt sind.

7. Verfahren nach einem der vorstehenden Ansprüche, wobei jedes der separaten Elemente (4) mit mindestens einem Loch (5) versehen ist, in welche Löcher (5) stiftförmige Vorsprünge (7) eingeführt werden, um die separaten Elemente (4) miteinander in Eingriff zu bringen.

8. Verfahren nach Anspruch 7, wobei die Löcher (5) der separaten Elemente (4) der Plattform (2) parallel sind.

9. Verfahren nach Anspruch 8, wobei die Löcher (5) Durchgangslöcher sind und wobei ein stiftförmiger Vorsprung (7) in Löcher (5) von mindestens zwei benachbarten separaten Elementen (4) eingeführt wird.

10. Verfahren nach Anspruch 9, wobei die Vorsprünge (7) von entgegengesetzten Seiten aus in die Löcher (5) einer Reihe separater Elemente (4) eingeführt werden.

11. Verfahren nach einem der vorstehenden Ansprüche, wobei jedes der separaten Elemente (4) mit mindestens zwei parallelen Löchern (5) versehen ist.

12. Verfahren nach einem der vorstehenden Ansprüche, wobei nach dem Schritt des Erhitzens das Produkt (1) in eine Zerkleinerungsvorrichtung gelegt wird, in welcher das hitzebehandelte Produkt pulverisiert wird.

13. Vorrichtung (6) zur Beseitigung des resultierenden sicheren Produkts in dem Verfahren nach einem der Ansprüche 1 bis 12, aufweisend zwei Reihen von einander zugewandten stiftförmigen Vorsprüngen (7), die in Längsrichtung der Vorsprünge (7) zueinander hin und voneinander weg bewegbar sind, wobei die stiftförmigen Vorsprünge (7) an einem Rahmen angebracht sind, der bezüglich einer Basis kippbar ist.

## Revendications

1. Procédé de chauffage d'un produit de déchet contenant de l'amiante (1) et d'enlèvement du produit sain résultant, comprenant les étapes de mise en place d'un produit de déchet contenant de l'amiante (1) sur une plate-forme (2), transport de la plate-forme (2) incluant le produit (1) dans un four, chauffage de la plate-forme (2) incluant le produit (1), enlèvement du produit (1) de la plate-forme (2) après chauffage en inclinant la plate-forme (2), dans lequel la plate-forme (2) comprend des éléments thermorésistants séparés (4) qui sont enclenchés ensemble avant inclinaison de la plate-forme (2).

2. Procédé selon la revendication 1, dans lequel les éléments thermorésistants (4) sont supportés par un support mobile (3).

3. Procédé selon la revendication 2, dans lequel l'étape de chauffage est réalisée dans un four continu à travers lequel le support (3) est déplacé.

4. Procédé selon l'une des revendications précédentes, dans lequel la plate-forme (2) comprend une matrice des éléments séparés (4) dans un plan horizontal incluant au moins deux rangées des éléments séparés (4) dans une première direction (X) et au moins deux rangées des éléments séparés (4) dans une seconde direction (Y) perpendiculaire à la première direction (X).

5. Procédé selon l'une des revendications précédentes, dans lequel les éléments séparés (4) sont en forme de bloc.

6. Procédé selon l'une des revendications précédentes, dans lequel les éléments séparés (4) sont réalisés en un matériau réfractaire.

7. Procédé selon l'une des revendications précédentes, dans lequel chacun des éléments séparés (4) est pourvu d'au moins un trou (5), trous (5) dans lesquels des saillies en forme de goupille (7) sont insérées afin d'enclencher les éléments séparés (4) ensemble.

8. Procédé selon la revendication 7, dans lequel les trous (5) des éléments séparés (4) de la plate-forme (2) sont parallèles.

9. Procédé selon la revendication 8, dans lequel les trous (5) sont des trous traversants, et dans lequel une saillie en forme de goupille (7) est insérée dans des trous (5) d'au moins deux éléments séparés (4) adjacents.

10. Procédé selon la revendication 9, dans lequel les saillies (7) de côtés opposés sont insérées dans les trous (5) d'une rangée d'éléments séparés (4).

11. Procédé selon l'une des revendications précédentes, dans lequel chacun des éléments séparés (4) est pourvu d'au moins deux trous (5) parallèles.

12. Procédé selon l'une des revendications précédentes, dans lequel, après l'étape de chauffage, le produit (1) est mis dans un broyeur dans lequel le produit traité thermiquement est pulvérisé.

13. Appareil (6) pour enlever le produit sain résultant dans le procédé selon l'une quelconque des revendications 1 à 12, comprenant deux rangées de saillies en forme de goupille (7) qui se font face l'une l'autre et qui sont mobiles vers et en éloignement l'une de l'autre dans une direction longitudinale des saillies (7), dans lequel les saillies en forme de goupille (7) sont montées sur un châssis qui est inclinable par rapport à une base.
